# EUROPÄISCHE PATENTSCHRIFT

(11) **EP 2 377 745 B1**
(45) Veröffentlichungstag und Bekanntmachung des Hinweises auf die Patenterteilung: **15.11.2017**
(21) Anmeldenummer: 11002198.7
(22) Anmeldetag: 17.03.2011
(51) Int. Cl.: B62D 15/02, G05D 1/02, B60W 50/08, B60W 30/12

(54) **Kraftfahrzeug mit Spurhalteunterstützung**
Motor vehicle with lane keeping system
Véhicule automobile avec un système de mantien de voie

(30) Priorität: 14.04.2010 DE 102010014946
(43) Veröffentlichungstag der Anmeldung: 19.10.2011
(73) Patentinhaber: Audi AG, 85045 Ingolstadt (DE)
(72) Erfinder: Limbacher, Reimund, 85055 Ingolstadt (DE); Freyer, Jörn, Dr., 81827 München (DE); Hudi, Ricky, 85092 Kasing (DE); Vukotich, Alejandro, 80992 München (DE); Duba, Georg-Peter, 85101 Lenting (DE)
(74) Vertreter: Thielmann, Frank

(56) Entgegenhaltungen:
- WO-A1-2007/145564
- DE-A1-102005 004 727
- DE-A1-102008 046 866

## Beschreibung

Die Erfindung betrifft ein Kraftfahrzeug, mit einer zumindest auf die Vorderräder wirkenden Lenkeinrichtung mit einem Lenkrad, sowie mit einer Spurhalteeinrichtung umfassend eine Steuerungsvorrichtung zur Bestimmung der Position des Kraftfahrzeugs relativ zu einer erfassten seitlichen Spurbegrenzung der vom Kraftfahrzeug befahrenen Fahrspur, und ein über die Steuerungsvorrichtung ansteuerbares, mit der Lenkeinrichtung mechanisch zusammenwirkendes Aktuatorelement zum Geben eines Lenkmoments in Abhängigkeit der erfassten Relativposition des Kraftfahrzeugs zur Spurbegrenzung, wobei der Betrieb des Aktuatorelements haptisch fühlbar auf das Lenkrad rückwirkt, wobei das Aktuatorelement über die Steuerungsvorrichtung in einem fahrerseitig zu- und abschaltbaren Betriebsmodus in Abhängigkeit der erfassten Relativposition des Kraftfahrzeugs zur Spurbegrenzung derart ansteuerbar ist, dass am Lenkrad eine Vibration fühlbar ist.

Moderne Kraftfahrzeuge weisen häufig Spurhalteeinrichtungen, sogenannte Spurhalteassistenzsysteme oder "Lane-Keeping-Assistance"-Systeme auf, die den Fahrer unterstützen. Eine Spurhalteeinrichtung umfasst einerseits ein Mittel zur Beobachtung des Fahrzeugvorfelds, üblicherweise eine Kamera, mit der das Fahrzeugvorfeld aufgenommen wird. Die aufgenommenen Kamerabilder werden mittels einer Auswerte- und Steuerungsvorrichtung analysiert, um Fahrspurbegrenzungen wie Mittellinien oder seitliche Fahrspurmarkierungen zu erfassen sowie die Relativposition des eigenen Kraftfahrzeugs zu einer solchen seitlichen Fahrspurbegrenzung zu ermitteln bzw. auch bezüglich des fortgesetzten Fahrwegs zu prognostizieren. Bleibt das Fahrzeug innerhalb der Fahrspur, so bleibt die Spurhalteeinrichtung inaktiv, greift also nicht aktiv in den Lenkbetrieb ein. Nähert sich jedoch das Kraftfahrzeug einer Fahrspurbegrenzung in einem hinreichenden Maß oder überfährt das Fahrzeug eine Fahrspurbegrenzung, so greift die Spurhalteeinrichtung aktiv in den Lenkbetrieb ein, dergestalt, dass die Steuerungsvorrichtung ein Aktuatorelement, üblicherweise in Form eines Servounterstützungsmotors, ansteuert, welches Aktuatorelement mit der Lenkeinrichtung, dort einer horizontal verschiebbaren Zahnstange, mechanisch zusammenwirkt. Über das Aktuatorelement wird ein Lenkmoment auf die Lenkeinrichtung und damit auf die gelenkten Vorderräder gegeben, welches Lenkmoment der Richtung, in welcher das Fahrzeug die Fahrspur zu verlassen droht, entgegenwirkt. Das heißt, dass die Spurhalteeinrichtung einen aktiven automatischen Lenkeingriff vornimmt, um das Fahrzeug entweder bereits vor oder zumindest während des Verlassens der Fahrspur wieder in die korrekte Fahrspurposition zurückzulenken.

Der Betrieb des Aktuatorelements, wenn dieses also aktiv ein Lenkmoment auf die Zahnstange der Lenkeinrichtung überträgt, wirkt infolge der grundsätzlich gegebenen mechanischen Kopplung der Lenkeinrichtung mit dem Lenkrad auf das Lenkrad zurück, das heißt, dass dieses infolge des korrigierenden Eingriff des Aktuatorelements leicht gedreht wird. Diese Lenkraddrehung ist für den Fahrer, der das Lenkrad in den Händen hat, haptisch fühlbar, das heißt, der Fahrer erhält einen haptischen Hinweis, dass das Aktuatorelement eingreift. Ein solcher Lenkeingriff einer Spurhalteeinrichtung ist also für den Fahrer spürbar, gleichwohl ist der Warncharakter begrenzt, da natürlich die Eingriffsstärke der Spurhalteeinrichtung, also die Größe und Intensität des vom Aktuatorelement gegebenen Lenkmoments nach oben limitiert ist. Der Grund hierfür ist die notwendige Beherrschbarkeit des Lenkvorgangs durch den Fahrer im Falle einer Fehlauslösesituation, wenn also beispielsweise ein Fehler in der Spurerkennung gegeben ist, sowie die Notwendigkeit einer leichten, einen geringen Kraftaufwand erfordernden Übersteuerbarkeit durch fahrerseitiges Gegenlenken, beispielsweise bei einem vom Fahrer gewollten Spurwechsel, ohne dass der Fahrer vorher den Blinker setzt. Aus diesem Grund ist folglich die Intensität eines Eingriffs durch das Aktuatorelement relativ gering, woraus resultiert, dass auch die haptische Rückwirkung und damit der Warncharakter, der mit einem Eingriff des Aktuatorelements verbunden ist, ebenfalls gering ist.

Daneben sind Kraftfahrzeuge bekannt, die eine spezielle Warneinrichtung besitzen, die eine haptische Warnung über eine Lenkrad- oder Sitzvibration und/oder eine akustische Warnung ausgeben, wenn das Fahrzeug die ausgewiesene Fahrspur verlässt. Es handelt sich hierbei um reine Warnsysteme, häufig auch "Lane-Departure-Warning"-Systeme genannt, die den Fahrer nur auf die Situation aufmerksam machen, ohne aktiv korrigierend einzugreifen. Da diese Systeme allein der Warnung dienen, ist ihr Warncharakter folglich die zentrale Funktion und deshalb stark ausgeprägt. Grundsätzlich besteht die Möglichkeit, eine Spurhalteeinrichtung sowie eine Spurverlassens-Warneinrichtung parallel dazu einzubauen, dies ist jedoch mit einem Mehraufwand an zu verbauenden Teilen, z. B. Vibrationsaktuator im Lenkrad oder Sitz, und erhöhten Kosten verbunden.

Aus DE 10 2005 004 727 A1 ist ein Kraftfahrzeug mit einem Spurhaltesystem bekannt, das ein Lenkmoment und eine Vibration am Lenkrad erzeugen kann. Zur Durchführung des selbsttätigen Lenkeingriffs wird eine Solllenkgröße ermittelt, über welche mittels einer Stelleinrichtung ein der Solllenkgröße entsprechender Zusatzsolllenkwinkel bzw. ein Zusatzsolllenkmoment eingestellt wird. Über die Stelleinrichtung kann zusätzlich zum selbsttätigen Lenkeingriff auch eine haptische Rückwirkung in Form von Vibrationen am Lenkrad erzeugt werden. Die Ausgabe der haptischen Rückmeldung wird beispielsweise ausgelöst, wenn das Fahrzeug die Fahrbahn trotz des automatischen Lenkeingriffs zu verlassen droht.

Der Erfindung liegt damit das Problem zugrunde, eine Kraftfahrzeug mit einer Spurhalteeinrichtung dahingehend zu verbessern, dass dieser eine verbesserte Warnfunktion zukommt.

Zur Lösung dieses Problems ist bei einem Kraftfahrzeug der eingangs genannten Art erfindungsgemäß vorgesehen, dass die Ansteuerung des Aktuatorelements zur Erzeugung der Vibration unabhängig von der Ansteuerung zur Erzeugung des Lenkmoments erfolgt, wobei die Ansteuerung zur Erzeugung der Vibration in Abhängigkeit einer vom Fahrer aktiv durchgeführten Lenkbewegung unterdrückbar ist.

Beim erfindungsgemäßen Kraftfahrzeug wird das Aktuatorelement nicht nur zur Erzeugung des Lenkmoments genutzt, um das Fahrzeug dann, wenn es die Relativposition des Kraftfahrzeugs zur Spurbegrenzung erfordert, wieder in die Fahrspur zurückzulenken. Vielmehr kommt dem Aktuatorelement die weitere Funktion zu, als vibrationsauslösendes Element zu dienen, nämlich dann, wenn die Relativposition des Fahrzeugs zu einer Spurbegrenzung es erfordert, nicht nur einen aktiven Lenkeingriff vorzunehmen, sondern den Fahrer auch aktiv und eindeutig wahrnehmbar zu warnen. Hierzu wird das Aktuatorelement über die Steuerungsvorrichtung dann, wenn die Randbedingungen hierfür gegeben sind, entsprechend angesteuert, beispielsweise reversierend bestromt, so dass quasi ein variierendes, "rüttelndes" Lenkmoment erzeugt wird, das vibrierend auf das Lenkrad rückwirkt, so dass am Lenkrad eine Vibration fühlbar ist. Das Aktuatorelement, üblicherweise ein Servomotor, wird also als Vibrationsmotor genutzt, die auf die Zahnstange übertragene Vibration resultierend aus der reversierenden Bestromung wirkt beispielsweise über das Lenkgetriebe und die Lenksäule auf das Lenkrad zurück. Der Fahrer spürt eine echte Lenkradvibration, die sofort seine Aufmerksamkeit erregt, so dass er die Situation wahrnimmt und reagieren kann. Das Aktuatorelement wird also multifunktional genutzt, einerseits zur Erzeugung des Lenkmoments, um das Fahrzeug in die ausgewiesene Fahrspur bei einem drohenden Spurverlassen durch eine korrigierende Lenkbewegung zurückzuführen, andererseits zur Erzeugung eines Vibrationssignals am Lenkrad, wenn tatsächlich ein Verlassen der Fahrspur unmittelbar bevorsteht oder erfolgt. Sowohl die Erzeugung des Lenkmoments als auch die Erzeugung der Vibration erfolgt nur, wenn der Fahrer keine Spurwechselabsicht durch Betätigen des Blinkers angezeigt hat.

Der Betriebsmodus zur Erzeugung der Lenkradvibration über das eine Aktuatorelement ist vorteilhafterweise fahrerseitig zu- und abschaltbar, so dass der Fahrer bestimmen kann, ob er die Spurhalteeinrichtung in ihrer originären Eigenschaft betreiben will, oder mit der zusätzlichen Vibrationswarnfunktion.

Erfindungsgemäß ist vorgesehen, dass die Ansteuerung des Aktuatorelements zur Erzeugung der Vibration unabhängig von der Ansteuerung zur Erzeugung des Lenkmoments erfolgt. Das heißt, dass die Auslösezeitpunkte zur Erzeugung des Lenkmoments einerseits und zur Erzeugung der Vibration andererseits grundsätzlich auch auseinanderfallen können, was in den meisten Fällen der Fall sein wird. Das heißt, dass letztlich unterschiedliche Relativpositionen gegeben sind, ab welchen über das Aktuatorelement entweder das Lenkmoment zum automatischen Gegenlenken erzeugt wird, oder das Aktuatorelement über die Steuerungsvorrichtung so angesteuert wird, dass der Vibrationsalarm erzeugt wird. Üblicherweise erfolgt der aktive gegenlenkende Eingriff des Aktuatorelements vor der Gabe eines Vibrationsalarms, das heißt, dass mit dem aktiven Gegenlenken bereits begonnen wird, wenn die Spur noch nicht verlassen wird und eine diesbezügliche Warnung noch nicht erforderlich ist. Die Vibrationswarnung ist beispielsweise erst dann erforderlich, wenn die Spurbegrenzung tatsächlich überfahren wird, der gegenlenkende Aktuatoreingriff jedoch bereits deutlich früher. Das heißt, dass die Erzeugung des Lenkmoments und die Erzeugung der Vibration sowohl zeitlich als auch relativpositionsmäßig entkoppelt sind. Selbstverständlich ist es möglich, die Erzeugung des Vibrationsmoments der Erzeugung des Lenkmoments zu überlagern, das heißt, dass nach wie vor über das Aktuator-element aktiv gegengelenkt wird, jedoch das Lenkmoment zur Erzeugung der Vibration durch geeignete Ansteuerung des Aktuatorelements variiert wird.

Nach einer Weiterbildung der Erfindung kann der Ansteuerzeitpunkt zur Erzeugung der Vibration fahrerseitig einstellbar sein. Das heißt, dass der Fahrer definieren kann, wann er über den Vibrationsalarm gewarnt werden möchte. Die Einstellung erfolgt letztlich dadurch, dass die Relativposition des Fahrzeugs zur benachbarten Fahrspurmarkierung, die den frühestmöglichen Warnzeitpunkt definiert, veränderbar ist. Der Fahrer kann sich beispielsweise relativ frühzeitig warnen lassen, beispielsweise bereits dann, wenn das der Fahrspur benachbarte Rad z. B. 20 cm neben der Markierung ist, oder erst im Zeitpunkt des tatsächlichen Überfahrens der Markierung, oder noch später, also erst dann, wenn die Markierung bereits überfahren und das Rad z. B. 20 cm seitlich der Markierung ist. Eine zweckmäßige Einstellung ist die grundsätzliche Warnung beispielsweise bei jedem Überfahren einer solchen Markierung.

Mitunter treten Situationen auf, in denen der Fahrer bewusst eine Spurmarkierung überfährt, beispielsweise dann, wenn er eine Kurve "schneidet", also einen engeren Radius fährt, als ihn die Kurve tatsächlich beschreibt. Eine Warnung kann in solchen Fällen erst später als normal erforderlich sein. Zu diesem Zweck sieht eine Weiterbildung der Erfindung vor, dass der Ansteuerzeitpunkt in Abhängigkeit des über die Steuerungsvorrichtung erfassbaren Spurverlaufs automatisch veränderbar ist. Das heißt, dass eine Adaption des Zeitpunkts zur Vibrationssignalerzeugung in Abhängigkeit des Spurverlaufs erfolgt. Im Falle des Kurvenschneidens wird später gewarnt, die Spurhalteeinrichtung passt den Warnzeitpunkt situationsbedingt automatisch an. Der Spurverlauf ist aus der Fahrzeugvorfelderfassung und der Ermittlung des Verlaufs der Fahrspurbegrenzungen bekannt. Hieraus ist auch ersichtlich, ob der Fahrer die kurveninnere oder die kurvenäußere Spurmarkierung schneidet bzw. ob benachbart zur befahrenen Fahrspur noch eine zweite Fahrspur verläuft, in die der Fahrer einfährt. Eine Adaption in Richtung zu einem späteren Warnzeitpunkt kann beispielsweise nur dann erfolgen, wenn der Fahrer eine kurveninnere Spurmarkierung schneidet und sich das Fahrzeug, beispielsweise bei einer Autobahnfahrt, auf der innersten Fahrspur befindet. Das heißt, dass auch eine Adaption in Abhängigkeit der gesamten Fahrspurführung erfolgt.

Weiterhin können Situationen auftreten, in denen aufgrund neben der befahrenen Fahrspur befindlichen Gegenstände eine verglichen mit dem "normalen" Warnzeitpunkt frühere Warnsignalgabe erforderlich ist. Beispielsweise wenn im Baustellenbereich aufgestellte seitliche Fahrspurbegrenzungen in Form von Barrieren und Ähnlichem relativ nah an die eigentliche Fahrspurmarkierung gestellt sind, oder wenn relativ nah zur Fahrspurmarkierung eine Leitplanke verläuft. Bei einer Warnung gestützt auf den "normalen" Warnzeitpunkt kann die Situation gegeben sein, dass sich das Fahrzeug bereits zu nah an dem Drittgegenstand befindet. Zu diesem Zweck kann auch in solchen Fällen der Ansteuerzeitpunkt in Abhängigkeit von über die Steuerungsvorrichtung erfassten, neben der befahrenen Fahrspur befindlichen Drittgegenständen automatisch veränderbar sein. Auch hier erfolgt also eine situationsbedingte Adaption des Warnzeitpunkts, also des Zeitpunkts der Erzeugung des Vibrationssignals automatisch durch die Spurhalteeinrichtung.

Wie einleitend ausgeführt besteht grundsätzlich die Möglichkeit, das vom Aktuatorelement erzeugte Lenkmoment fahrerseitig zu überdrücken, mithin also gegenzulenken. Dies wird vom Fahrer mitunter unbewusst gemacht, da er haptisch eine wenngleich geringe, aus dem Betrieb des Aktuatorelements resultierende Lenkradbewegung spürt, die er ausgleichen möchte. Gleichwohl kann es dabei trotz allem zu einem unbewussten Annähern oder Befahren der Fahrspurmarkierung kommen. Damit dem Fahrer auch in diesen Fällen die möglicherweise gegebene Gefahrensituation signalisiert wird, wird das Aktuatorelement in Weiterbildung der Erfindung zur Erzeugung der Vibration auch dann angesteuert, wenn der Fahrer das zeitgleich erzeugte Lenkmoment aktiv überdrückt.

Mitunter treten Situationen auf, in denen der Fahrer die Lenkbewegungen durchführt, um einen schnellen Spurwechsel vorzunehmen, weil er einem Hindernis ausweicht oder Ähnliches. Die Erzeugung einer Vibration ist in diesem Fall nicht erforderlich. Deshalb ist die Ansteuerung zur Erzeugung der Vibration in Abhängigkeit einer vom Fahrer aktiv durchgeführten Lenkbewegung unterdrückbar, wobei als auslösende Bedingung für eine Unterdrückung beispielsweise eine Lenkradverdrehung um einen vorbestimmten Mindestwinkel respektive eine Auslenkung der Vorderräder um einen bestimmten Mindestwinkel respektive ein fahrerseitig aufgebrachtes Lenkmoment über einem Mindestmoment gewertet wird.

Wie einleitend beschrieben, ist der Betriebsmodus der Steuerungsvorrichtung zur Ansteuerung des Aktuatorelements als Vibrationsmotor zu- und abschaltbar. Dies kann entweder über ein manuelles Wählelement oder eine Sprachanwahl, insbesondere in Verbindung mit einer optischen Darstellung an einer Anzeigeeinrichtung, erfolgen. Moderne Kraftfahrzeuge besitzen häufig einen Dreh-Drück-Wählknopf, über den in einem an einer Anzeigeeinrichtung, wie dem häufig verbauten Display, angezeigten Menü navigiert werden kann. Hierüber kann ohne weiteres auch in einem geeigneten Einstellmenü der Betriebsmodus der Spurhalteeinrichtung verändert werden, diese also entweder nur als Spurhalteeinrichtung betrieben werden, oder zusätzlich auch als Vibrationsalarmeinrichtung. Alternativ denkbar wäre auch die Einstellung durch Sprachanwahl, nachdem moderne Kraftfahrzeuge häufig über Sprachdialogsysteme verfügen.

Schließlich kann vorgesehen sein, dass der vom Fahrer zu- oder abgeschaltete Betriebsmodus und gegebenenfalls ein vom Fahrer eingestellter Ansteuerzeitpunkt fahrerspezifisch speicherbar ist. Häufig wird ein Kraftfahrzeug von verschiedenen Fahrern benutzt, die jeweils unterschiedliche Einstellungen bezüglich des Betriebsmodus der Spurhalteeinrichtung vornehmen. Damit ein Fahrer nicht jedes Mal neu seine gewünschten Einstellungen vornehmen muss, besteht gemäß dieser Erfindungsausgestaltung die Möglichkeit der Personalisierung. Das heißt, dass fahrerspezifisch die gewählten Einstellungen abgespeichert werden und bei Erkennung des entsprechenden Fahrers automatisch diese Einstellungen vorgenommen werden. Beispielsweise kann dies durch eine Schlüsselzuordnung erfolgen. Wird also ein bestimmter Fahrzeugschlüssel erkannt, so werden automatisch die diesem Schlüssel, der wiederum einem bestimmten Fahrer gehört, zugeordneten Einstellungen vorgenommen. Auch eine unmittelbare Fahrererkennung beispielweise über einen Fingerabdruckscanner oder eine kameragestützte Fahrerindividualisierung ist möglich, wie auch eine Personalisierung über sogenannte Keyless-Go-Karten und Ähnlichem.

Zur weiteren Verbesserung der Warntiefe ist es zweckmäßig, wenn, vorzugsweise zeitgleich mit der Erzeugung der Vibration, ein optischer Warnhinweis bezüglich des erfassten Verlassens der Fahrspur ausgegeben wird, beispielsweise über eine Lichtanzeige am Display, die beispielsweise blinkt und gleichzeitig angibt, auf welcher Seite die Markierung überfahren wird.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs als Teilansicht,
- Fig. 2: eine Fahrsituation, in der ein Lenkmoment erzeugt wird, und
- Fig. 3: eine Fahrsituation, in der zusätzlich ein Vibrationssignal erzeugt wird.

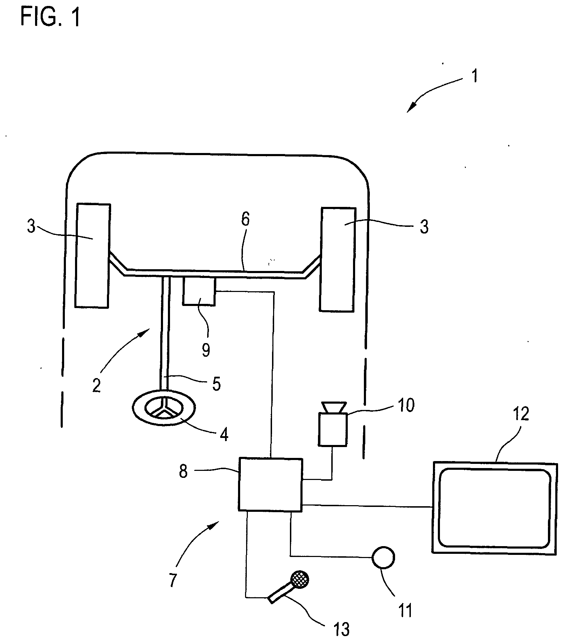

Fig. 1 zeigt in Form einer Prinzipdarstellung eine Teilansicht eines erfindungsgemäßen Kraftfahrzeugs 1, umfassend eine Lenkeinrichtung 2, die im gezeigten Beispiel auf die Vorderräder 3 wirkt. Die Lenkeinrichtung umfasst ein Lenkrad 4, eine Lenksäule 5 sowie eine hier nur stilisierte Lenkzahnstange 6, die in an sich bekannter Weise mit den Vorderrädern bewegungsgekoppelt ist. Wie üblich kann durch Drehen des Lenkrads 4 der Lenkwinkel der Vorderräder 3 und damit die Fahrtrichtung des Kraftfahrzeugs 1 verändert werden.

Vorgesehen ist ferner eine Spurhalteeinrichtung 7 umfassend eine Steuerungseinrichtung 8 sowie ein über die Steuerungseinrichtung 8 ansteuerbares Aktuatorelement 9, das mit der Lenkzahnstange 6, letztlich also der Lenkeinrichtung 2 mechanisch gekoppelt ist. Das Aktuatorelement 9 ist beispielsweise ein Servounterstützungsmotor, der über eine geeignete Abtriebswelle mit der Lenkzahnstange 6 kämmt. Über das Aktuatorelement kann aktiv ein Lenkmoment auf die Lenkzahnstange 6 und damit auf die Lenkeinrichtung 2 gegeben werden, welches Lenkmoment dazu führt, dass die Lenkzahnstange 6 horizontal bewegt wird, worüber die Vorderräder 3 verstellt werden können.

Die Steuerungsvorrichtung 8 kommuniziert im gezeigten Ausführungsbeispiel mit einer Kamera 10, die das Fahrzeugvorfeld aufnimmt. Aus den kontinuierlich aufgenommenen Kamerabildern ermittelt die Steuerungsvorrichtung 8 die beiden seitlichen Begrenzungen der vom Kraftfahrzeug 1 befahrenen Fahrspur, was durch geeignete Bildverarbeitungs- und Analysealgorithmen möglich ist, beispielsweise geeignete Kantendetektionsalgorithmen und Ähnliches. Ferner ermittelt die Steuerungsvorrichtung 8 die Relativposition des Kraftfahrzeugs 1 zu einer erfassten Fahrspurbegrenzung. Hierbei wird beispielweise auf die Position eines Vorderrads 3 relativ zur Fahrspurmarkierung abgestellt. Da die Kamera 10 fest verbaut ist, kann aus der Lage der in den Kamerabildern ermittelten Fahrspurmarkierungen exakt die Relativposition des Fahrzeugs zu einer solchen Fahrspurmarkierung bestimmt werden.

Ergibt sich nun aus der Bildanalyse, dass das Kraftfahrzeug 1, einen vorgegebenen Mindestabstand erreichend oder unterschreitend, benachbart zu einer Fahrspurmarkierung fährt, woraus auf ein unbeabsichtigtes Verlassen der Fahrspur geschlossen wird, nachdem angenommenermaßen der Fahrer keinen Blinker gesetzt hat, so steuert die Steuerungsvorrichtung 8 das Aktuatorelement 9 derart an, dass dieses über seinen mechanischen Eingriff an der Lenkzahnstange 6 ein Lenkmoment erzeugt, das dem Spurverlassen entgegenwirkt, über das also das Kraftfahrzeug 1 aktiv wieder in die Fahrspurmitte zurückgelenkt wird. Das heißt, dass die Spurhalteeinrichtung 7 in der Lage ist, aktiv in die Fahrzeuglenkung einzugreifen, wobei das Lenkmoment vom Fahrer selbstverständlich aktiv überdrückt werden bzw. der Fahrer zu jedem Zeitpunkt selbst die Lenkung wieder übernehmen kann. Der Fahrer spürt einen Aktuatorelementeingriff, nachdem das Lenkrad 4 während eines solchen Eingriffs aufgrund des erzeugten Lenkmoments etwas bewegt wird, was haptisch über die am Lenkrad befindlichen Hände vom Fahrer erfasst werden kann. Das heißt, dass der Betrieb des Aktuatorelements stets haptisch fühlbar auf das Lenkrad 4 rückwirkt. Er verursacht eine haptisch spürbare Lenkradbewegung.

Die Steuerungsvorrichtung 8 ist darüber hinaus dazu ausgebildet, das Aktuatorelement 9 zur Gabe eines Vibrationswarnsignals am Lenkrad 4 entsprechend anzusteuern. Hierzu wird beispielsweise das Aktuatorelement 9 reversierend bestromt, so dass es letztlich ein größenmäßig und/oder richtungsmäßig variierendes Lenkmoment erzeugt. Dies führt dazu, dass das Lenkrad 4 infolge der eine bestimmte Frequenz aufweisenden Lenkmomentvariation eine entsprechend frequente Bewegung durchführt, mithin also vibriert. Diese Vibration wird ebenfalls vom Fahrer als eindeutiges Warnsignal wahrgenommen.

Eine solche Ansteuerung des Aktuatorelements 9 über die Steuerungsvorrichtung 8 erfolgt dann, wenn aufgrund der Analyse der von der Kamera 10 aufgenommenen Bilder ein Verlassen der Fahrspur gegeben ist, beispielsweise wenn das Vorderrad 3 eine Fahrspurmarkierung tatsächlich überfährt. Das heißt, dass die Spurhalteeinrichtung 7 nicht nur der zur Erzeugung eines eine aktive Rücklenkung erwirkenden Lenkmoments dient, sondern darüber hinaus auch zur situationsbedingten Gabe eines Vibrationswarnsignals über das Lenkrad 4.

Der Betriebsmodus betreffend die Erzeugung der Vibration, also die Einrichtungsfunktion der Gabe des Vibrationswarnsignals ist fahrerseitig zu- und abschaltbar. Dies erfolgt beispielsweise über ein manuelles Wählelement 11, beispielsweise einen Dreh-Druck-Knopf, in Verbindung mit einem an einer Anzeigeeinrichtung 12 wie einem LCD-Display angezeigten Navigationsmenü, oder über ein Sprachdialogsystem 13 durch eine Spracheingabe, gegebenenfalls wiederum in Verbindung mit einer optischen Anzeige eines Menüs an der Anzeigeeinrichtung 12. Das heißt, dass der Fahrer selbst entscheiden kann, ob er die Spurhalteeinrichtung in ihrer originären Funktion betreiben möchte, oder zusätzlich auch als Spurverlassenswarnsystem.

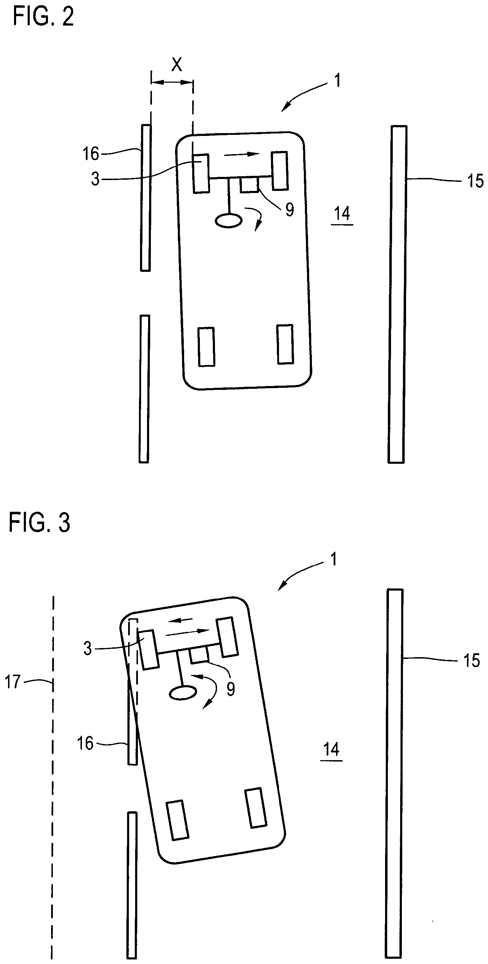

Die Figuren 2 und 3 zeigen zwei typische Fahrsituationen, in denen ein aktiver Lenkungseingriff erfolgt (Fig. 2) und zusätzlich eine Warnsignalgabe bei zugeschalteter Warnfunktion (Fig. 3).

Das Kraftfahrzeug 1 befährt eine Fahrspur 14, die rechts und links durch entsprechende Fahrspurmarkierungen 15, 16 begrenzt ist. Die Kamera 10 nimmt kontinuierlich das Fahrzeugvorfeld auf, die Steuerungsvorrichtung 8 ermittelt kontinuierlich die Lage der Fahrspurmarkierungen 15, 16 in den Kamerabildern sowie die Position des eigenen Kraftfahrzeugs 1 relativ zu diesen. Im Beispiel gemäß Fig. 2 sei angenommen, dass das Kraftfahrzeug 1 beispielsweise aufgrund einer Unachtsamkeit des Fahrers sich langsam der Fahrspurmarkierung 16 annähert. Das linke Vorderrad 3 befindet sich in einem Abstand x zur Fahrspurmarkierung 16, der einem Mindestabstand entspricht, ab dem ein Eingriff der Spurhalteeinrichtung 7 in den Lenkbetrieb erfolgt. In diesem Fall steuert die Steuerungsvorrichtung 8 das Aktuatorelement 9 derart an, dass es ein Lenkmoment erzeugt, das zum Zurücklenken des Kraftfahrzeugs 1 in die Mitte der Fahrspur 14 führt, das heißt also aktiv die Fahrtrichtung korrigiert. Das Lenkmoment ist durch den gezeigten Richtungspfeil dargestellt. Dieses Lenkmoment führt zu einer konstanten, in eine Richtung gerichteten haptisch fühlbaren Lenkradbewegung, die jedoch relativ schwach ausgeprägt ist, da das Lenkmoment selbst nicht allzu groß ist und vom Fahrer zu jedem Zeitpunkt überdrückt werden kann.

Fig. 3 zeigt nun die Fig. 2 fortsetzende Situation, in der das Kraftfahrzeug 1 nach wie vor noch in Richtung der Fahrspurmarkierung 16 fährt, beispielsweise weil der Fahrer gegebenenfalls unbewusst leicht gegenlenkt. Die Steuerungsvorrichtung 8 ermittelt nun aus den Kamerabildern, dass sich die Relativposition des Kraftfahrzeugs 1 zur Fahrspurmarkierung 16 so geändert hat, dass mit einem tatsächlichen Verlassen der Fahrspur 14 zu rechnen ist. Die Steuerungsvorrichtung 8 erfasst beispielsweise, dass das linke Vorderrad 3 gerade im Begriff ist, die Fahrspurmarkierung 16 zu überfahren. Dies ist jedoch als Auslösezeitpunkt für die Gabe des Vibrationssignals über das Lenkrad 4 definiert. Zu diesem Zweck steuert nun die Steuerungsvorrichtung 8 das Aktuatorelement 9 derart an, dass es ein quasi vibrierendes Lenkmoment respektive eine vibrierende Kraft an die Lenkzahnstange 6 legt, wie dies durch die beiden einander gegengerichteten Pfeile in Fig. 3 dargestellt ist. Dies kann durch eine reversierende Bestromung erfolgen, die beispielsweise auch derart ausgelegt sein kann, dass das rücklenkende Lenkmoment grundsätzlich beibehalten bleibt, dieses jedoch in seiner Intensität variiert und Ähnliches. Die Ansteuerung erfolgt dabei in jedem Fall derart, dass am Lenkrad 4 eine vibrierende Bewegung, wie durch den Doppelpfeil dargestellt ist, haptisch spürbar ist. Das heißt, dass der Fahrer infolge der entsprechenden Ansteuerung des Aktuatorelements 9 ein warnendes Vibrationssignal am Lenkrad 4 wahrnimmt. Sollte er bis dahin den Eingriff des Aktuatorelements 9 noch nicht wahrgenommen haben, so erhält er spätestens jetzt über dieses aktiv erzeugte Vibrationswarnsignal eine entsprechende Information über die sich anbahnende Gefahrensituation, nämlich das gegebenenfalls unbewusste Verlassen der Fahrspur 14.

Der Zeitpunkt, ab dem die Steuerungsvorrichtung 8 das Aktuatorelement 9 zur Gabe des Vibrationswarnsignals ansteuert, ist vom Fahrer bei Bedarf veränderbar, was beispielsweise über das Wählelement 11 in Verbindung mit einer entsprechenden Menüdarstellung an der Anzeigevorrichtung 12 möglich ist. Der Fahrer kann sich beispielsweise etwas früher warnen lassen, also nicht erst beim tatsächlichen Überfahren. Die Einstellung kann dabei derart sein, dass die Warnsignalgabe auch zeitgleich mit dem ersten Eingriff des Aktuatorelements 9 zur Erzeugung des rücklenkenden Gegenmoments (Fig. 2) erfolgt. Auch ein späterer Zeitpunkt als der Beginn des Überfahrens der Fahrspurmarkierung ist wählbar.

Darüber hinaus ist, wie Fig. 3 zeigt, auch eine automatische Adaption des Warnsignalgabezeitpunkts, also des Zeitpunkts der Erzeugung der Vibration, denkbar. Beispielsweise sei angenommen, dass benachbart zur Fahrspurmarkierung 16 ein Drittgegenstand 17 wie beispielsweise eine temporär aufgestellte, die Fahrbahn verschmälernde Barriere und dergleichen erfasst wurde. Die Gabe des Vibrationswarnsignals erst mit Beginn des Überfahrens der Fahrspurmarkierung 16 kann in diesem Fall gegebenenfalls zu spät sein, da sich das Kraftfahrzeug 1 dann bereits zu weit dem Drittgegenstand 17 genähert hat. Aus diesem Grund kann die Steuerungseinrichtung 8 den Zeitpunkt der Ansteuerung des Aktuatorelements 9 zur Gabe des variierenden Lenkmoments variieren, hier also früher legen. Eine entsprechende Adaption ist, da aus den Kamerabildern die Position des Drittgegenstands 17 erfassbar ist, gegebenenfalls aber auch durch Auswertung weiterer beispielsweise über geeignete Ultraschallsensoren, die das Umfeld erfassen, und Ähnliches erfasster Informationen, möglich. Die Steuerungsvorrichtung 8 ist also in der Lage, die Relativposition des Kraftfahrzeugs 1 zu einem solchen Drittgegenstand 17 erfassen zu können, bzw. auch den Abstand der Fahrspurmarkierung 16 zu dem Drittgegenstand 17. Denn nur wenn dieser kleiner als sein definierter Mindestabstand ist, ist eine Verlegung des Warnzeitpunkts auf einen früheren Zeitpunkt erforderlich.

Situationsbedingt kann beispielsweise auch beim Kurvenschneiden eine Adaption in die andere Richtung erfolgen, nämlich auf einen späteren Zeitpunkt, da das Überfahren einer Fahrspurmarkierung beim Befahren einer Kurve relativ häufig vorkommt und nicht zwingend die Gabe eines Warnsignals erfordert, sofern es nicht ein Erfordernis resultierend aus der gerade befahrenen Fahrspur gibt. Wird beispielsweise auf einer dreispurigen Autobahn die mittlere Fahrspur befahren, so ist ein Kurvenschneiden selbstverständlich nicht risikolos, eine frühzeitige Warnsignalgabe in jedem Fall erforderlich. Eine Adaption zu einem späteren Zeitpunkt ist jedoch beispielsweise dann möglich, wenn die innerste Fahrspur befahren wird und die innere Spurbegrenzung überfahren wird.

## Patentansprüche

1. Kraftfahrzeug (1), mit einer zumindest auf die Vorderräder (3) wirkenden Lenkeinrichtung mit einem Lenkrad (4), sowie mit einer Spurhalteeinrichtung (7) umfassend eine Steuerungsvorrichtung (8) zur Bestimmung der Position des Kraftfahrzeugs (1) relativ zu einer erfassten seitlichen Spurbegrenzung (15, 16) der vom Kraftfahrzeug (1) befahrenen Fahrspur, und ein über die Steuerungsvorrichtung (8) ansteuerbares, mit der Lenkeinrichtung mechanisch zusammenwirkendes Aktuatorelement (9) zum Geben eines Lenkmoments in Abhängigkeit der erfassten Relativposition des Kraftfahrzeugs (1) zur Spurbegrenzung (15, 16), wobei der Betrieb des Aktuatorelements (9) haptisch fühlbar auf das Lenkrad (3) rückwirkt, wobei das Aktuatorelement (9) über die Steuerungsvorrichtung (8) in einem fahrerseitig zu- und abschaltbaren Betriebsmodus in Abhängigkeit der erfassten Relativposition des Kraftfahrzeugs (1) zur Spurbegrenzung derart ansteuerbar ist, dass am Lenkrad (4) eine Vibration fühlbar ist,
**dadurch gekennzeichnet,**
**dass** die Ansteuerung des Aktuatorelements (9) zur Erzeugung der Vibration unabhängig von der Ansteuerung zur Erzeugung des Lenkmoments erfolgt, wobei die Ansteuerung zur Erzeugung der Vibration in Abhängigkeit einer vom Fahrer aktiv durchgeführten Lenkbewegung unterdrückbar ist.

2. Kraftfahrzeug nach Anspruch 1,
**dadurch gekennzeichnet,**
**dass** der Ansteuerzeitpunkt zur Erzeugung der Vibration fahrerseitig einstellbar ist.

3. Kraftfahrzeug nach einem der vorangehenden Ansprüche,
**dadurch gekennzeichnet,**
**dass** der Ansteuerzeitpunkt in Abhängigkeit des über die Steuerungsvorrichtung (8) erfassbaren Spurverlaufs und/oder erfasster, neben der befahrenen Fahrspur befindlicher Drittgegenstände (17) automatisch veränderbar ist.

4. Kraftfahrzeug nach einem der vorangehenden Ansprüche,
**dadurch gekennzeichnet,**
**dass** das Aktuatorelement (9) zur Erzeugung der Vibration auch dann ansteuerbar ist, wenn der Fahrer das zeitgleich erzeugte Lenkmoment aktiv überdrückt.

5. Kraftfahrzeug nach einem der vorangehenden Ansprüche,
**dadurch gekennzeichnet,**
**dass** der Betriebsmodus der Steuerungsvorrichtung (8) über ein manuelles Wählelement (11) oder eine Sprachanwahl (13), insbesondere in Verbindung mit einer optischen Darstellung an einer Anzeigeeinrichtung (12), zu- und abschaltbar ist.

6. Kraftfahrzeug nach einem der vorangehenden Ansprüche,
**dadurch gekennzeichnet,**
**dass** der vom Fahrer zu- oder abgeschaltete Betriebsmodus und gegebenenfalls ein vom Fahrer eingestellter Ansteuerzeitpunkt fahrerspezifisch speicherbar ist.

7. Kraftfahrzeug nach einem der vorangehenden Ansprüche,
**dadurch gekennzeichnet,**
**dass** vorzugsweise zeitgleich mit der Erzeugung der Vibration ein optischer Warnhinweis an einer Anzeigeeinrichtung (12) ausgebbar ist.

## Claims

1. Motor vehicle (1) having a steering assembly, with a steering wheel (4), that acts on at least the front wheels (3), and having a lane-keeping device (7) comprising a controller (8) for determining the position of the motor vehicle (1) relative to a detected lateral lane boundary (15, 16) of the lane being driven along by the motor vehicle (1), and an actuator element (9), which can be activated by the controller (8) and cooperates mechanically with the steering assembly, for providing a steering moment as a function of the detected position of the motor vehicle (1) relative to the lane boundary (15, 16), wherein operation of the actuator element (9) causes a tangible reaction on the steering wheel (3), wherein the actuator element (9) can be activated by the controller (8) in an operating mode that can be switched on and off by the driver as a function of the detected position of the motor vehicle (1) relative to the lane boundary in such a way that a vibration can be felt on the steering wheel (4),
**characterised in that**
the actuator element (9) for generating the vibration is activated independently of the activation for generating the steering moment, wherein the activation for generating the vibration can be suppressed as a function of a steering movement actively performed by the driver.

2. Motor vehicle according to claim 1,
**characterised in that**
the activation instant for generating the vibration can be set by the driver.

3. Motor vehicle according to either of the preceding claims,
**characterised in that**
the activation instant can be automatically changed as a function of the lane characteristic that can be detected by the controller (8) and/or detected third objects (17) located next to the lane being travelled on.

4. Motor vehicle according to any one of the preceding claims,
**characterised in that**
the actuator element (9) for generating the vibration can also be activated if the driver actively overcontrols the simultaneously generated steering moment.

5. Motor vehicle according to any one of the preceding claims,
**characterised in that**
the operating mode of the controller (8) can be switched on and off by a manual selector element (11) or a voice selector (13), in particular in conjunction with a visual display on a display device (12).

6. Motor vehicle according to any one of the preceding claims,
**characterised in that**
the operating mode switched on or off by the driver, and optionally an activation instant set by the driver, can be saved in a driver-specific manner.

7. Motor vehicle according to any one of the preceding claims,
**characterised in that**
a visual warning can preferably be output on a display device (12) at the same time as the vibration is generated.

## Revendications

1. Véhicule automobile (1), avec un dispositif de braquage agissant au moins sur les roues avant (3) et comportant un volant (4) ainsi qu'avec un dispositif (7) de maintien dans la voie, comprenant un dispositif de commande (8) destiné à déterminer la position du véhicule automobile (1) par rapport à une délimitation de voie latérale détectée (15, 16) de la voie de circulation sur laquelle roule le véhicule automobile (1) et un élément actionneur (9) qui peut être commandé par l'intermédiaire du dispositif de commande (8), qui coopère mécaniquement avec le dispositif de braquage et qui est destiné à donner un couple de braquage en fonction de la position relative détectée du véhicule automobile (1) par rapport à la délimitation de voie (15, 16), dans lequel le fonctionnement de l'élément actionneur (9) est envoyé en réaction sur le volant (3) de manière à être senti au toucher, et dans lequel l'élément actionneur (9) peut être commandé par l'intermédiaire du dispositif de commande (8), dans un mode de fonctionnement qui peut être enclenché et arrêté par le conducteur, en fonction de la position relative détectée du véhicule automobile (1) par rapport à la délimitation de voie de telle sorte qu'une vibration peut être sentie sur le volant (4),
**caractérisé en ce**
**que** la commande de l'élément actionneur (9) en vue de la production de la vibration s'effectue indépendamment de la commande en vue de la production du couple de braquage, la commande en vue de la production de la vibration pouvant être annulée en fonction d'un mouvement de braquage effectué activement par le conducteur.

2. Véhicule automobile selon la revendication 1,
**caractérisé en ce**
**que** l'instant de commande en vue de la production de la vibration est réglable par le conducteur.

3. Véhicule automobile selon l'une des revendications précédentes,
**caractérisé en ce**
**que** l'instant de commande peut être modifié automatiquement en fonction de la trajectoire de voie pouvant être détectée par l'intermédiaire du dispositif de commande (8) et/ou en fonction d'objets tiers (17) détectés se trouvant à côté de la voie de circulation parcourue.

4. Véhicule automobile selon l'une des revendications précédentes,
**caractérisé en ce**
**que** l'élément actionneur (9) peut aussi être commandé en vue de la vibration lorsque le conducteur surexcite activement le couple de braquage produit au même moment.

5. Véhicule automobile selon l'une des revendications précédentes,
**caractérisé en ce**
**que** le mode de fonctionnement du dispositif de commande (8) peut être enclenché et arrêté par l'intermédiaire d'un élément sélectionneur manuel (11) ou par l'intermédiaire d'une commande vocale (13), en particulier en relation avec une représentation optique sur un dispositif d'affichage (12).

6. Véhicule automobile selon l'une des revendications précédentes,
**caractérisé en ce**
**que** le mode de fonctionnement enclenché ou arrêté par le conducteur et le cas échéant un instant de commande réglé par le conducteur peuvent être mémorisés de manière spécifique au conducteur.

7. Véhicule automobile selon l'une des revendications précédentes,
**caractérisé en ce**
**qu'**un avertissement optique peut être fourni au niveau d'un dispositif d'affichage (12) de préférence en même temps que la production de la vibration.
